# EUROPÄISCHE PATENTSCHRIFT

(11) **EP 3 305 497 B1**
(45) Veröffentlichungstag und Bekanntmachung des Hinweises auf die Patenterteilung: **21.08.2019**
(21) Anmeldenummer: 17001627.3
(22) Anmeldetag: 05.10.2017
(51) Int. Cl.: B29C 45/14, B29C 33/00

(54) **VORRICHTUNG UND VERFAHREN ZUR HERSTELLUNG EINES HINTERSPRITZTEN VERBUNDFORMTEILS**
MOLDING TOOL AND PROCESS FOR MANUFACTURING AN OVERMOLDED COMPOSITE PART
MOULE ET PROCÉDÉ POUR LA FABRICATION UN ARTICLE COMPOSITE SURMOULÉ

(30) Priorität: 06.10.2016 CH 13402016
(43) Veröffentlichungstag der Anmeldung: 11.04.2018
(73) Patentinhaber: Georg Kaufmann Formenbau AG, 5453 Busslingen (CH)
(72) Erfinder: Frei, Michael, 5024 Küttigen (CH); Vollenweider, Thomas, 5603 Staufen (CH)
(74) Vertreter: Laminger, Norbert

(56) Entgegenhaltungen:
- EP-A1- 1 090 731
- US-A1- 2008 197 670

## Beschreibung

Die vorliegende Erfindung betrifft eine Vorrichtung zur Herstellung eines Verbundformteils, welches eine Trägerstruktur und eine flächenhafte Dekorstruktur umfasst und einen Umbug aufweist. Weiter betrifft die vorliegende Erfindung ein Verfahren zur Herstellung entsprechender Verbundformteile, alles gemäss den Oberbegriffen der unabhängigen Ansprüche.

Bei den erfindungsgemässen Verbundformteilen handelt es sich gängiger Weise um Formteile, welche aufgrund besonderer Anforderungen an die Optik, Haptik oder anderweitiger Oberflächenbeschaffenheit zusammengesetzt sind aus einem Trägermaterial mit bestimmten Eigenschaften, und einer flächenhaften Dekorstruktur, welche der Oberfläche ihre gewünschten Eigenschaften verleiht. Die Trägerstruktur wird häufig hinsichtlich der erforderlichen Stabilität und/oder des Gewichts ausgewählt. Solche Verbundformteile werden zum Beispiel im Automobilbau zur Innenverkleidung von Türen, Lehnenverkleidungen von Sitzen und Armaturen verwendet Die flächenhafte Dekorstruktur kann zum Beispiel Lederoptik oder besondere Masserungen aufweisen.

Bei der Herstellung solcher Verbundformteile werden Spritzgussverfahren verwendet, wobei eine vorgefertigte, flächenhafte Dekorstruktur in einer Spritzgussvorrichtung mit der entsprechenden Trägerstruktur hinterspritzt wird. Beim Hinterspritzen ist die Trägerstruktur in einem schmelzflüssigen Zustand und es findet eine stoff- und formschlüssige Verbindung mit der flächenhaften Dekorstruktur statt.

Eine besondere Herausforderung stellen dabei die Kanten dar. Die Verbundkanten müssen nachträglich bearbeitet werden und tendieren dazu fransig auszusehen, da an den Verbindungen zwischen der Trägerstruktur und der flächenhaften Dekorstruktur verschiedene Materialien aufeinandertreffen. Um die Optik nicht zu kompromittieren, werden überstehende Dekormaterialen an den Bauteilkanten umgebugt. Dieser Umbug dient dazu, die unansehnliche Kante nach der Montage der Verbundformteile zu verbergen.

Die EP 1 090 731 A1 zeigt ein derartiges Verfahren zur Herstellung von Verbundformteilen. Weiter soll das Dekor im Formwerkzeug umgebugt und beschnitten werden. Die dazu verwendete Spritzgussvorrichtung umfasst im Wesentlichen vier Elemente. Eine Matrize dient zur Aufnahme des Dekors im offenen Zustand. Ein der Matrize gegenüber angeordneter Umbugschieber formt die umgebogene Stirnkante des Formteils im geschlossenen Zustand. Der Matrize ebenfalls gegenüber angeordnet befindet sich die Patrize, welche gemeinsam mit der Matrize den zu befüllenden Hohlraum und für das Formteil die formgebenden Masse definiert. Zusätzlich verfügt die Vorrichtung über ein Schneidmesser mit einem an seinem distalen Ende im Wesentlichen parallel zur Umbugkante ausgebildeten Schneidgrat. In diesem Dokument begrenzt das Schneidmesser das distale Ende des Formhohlraums und es wird lediglich bis zum Umbug hinterspritzt, damit das Schneidelement überstehende Dekorfolie abtrennen kann.

Die Verwendung eines zusätzlichen und separaten Schneidelementes macht die Vorrichtung aber komplexer und somit teurer. Außerdem ist je nach Beschaffenheit der flächenhaften Dekorstruktur ein Schneiden mit zusätzlichen Schwierigkeiten behaftet. Manche Dekorstrukturen enthalten Fasermaterial und lassen sich nicht oder nur ungenügend in einer bestimmten Ebene schneiden, ohne dass es dabei zu Ausfransungen an der Kante kommt Wiederum andere flächenhafte Dekorstrukturen sind elastisch, so dass ein Schneiden zu einem Verziehen der flächenhaften Dekorstruktur an den Kanten führen kann, was ebenfalls unansehnlich ist, bis hin zu Materialien oder Geometrien, bei denen kein nachträgliches Schneiden durchführbar ist.

Es besteht somit ein Bedarf nach einer Vorrichtung und einem entsprechenden Verfahren, mit welchen man Verbundformteile mit flächenhaften Dekorstrukturen möglichst einfach und inklusive Umbug in einem Schritt herstellen kann und dabei gleichzeitig von einem Überschussmaterial der flächenhaften Dekorstruktur befreien kann.

Es ist somit eine Aufgabe der vorliegenden Erfindung, mindestens einen Nachteil des Bekannten zu beheben. Es ist insbesondere eine Aufgabe der vorliegenden Erfindung, eine Vorrichtung und ein Verfahren bereitzustellen, mit welchem Verbundformteile hergestellt werden können, welche einen geringeren Wartungsaufwand aufweisen, und weiter insbesondere mit einem sauberen Schnitt das überschüssige Dekormaterial abtrennen kann.

Diese Aufgabe ist durch eine Vorrichtung und ein Verfahren gemäss kennzeichnendem Teil der unabhängigen Ansprüche gelöst.

### Darstellung der Erfindung

Ein Aspekt der vorliegenden Erfindung betrifft ein Verfahren zur Herstellung eines Verbundformteils, welches eine Trägerstruktur und eine flächenhafte Dekorstruktur umfasst und einen Umbug aufweist.

Im Sinne der vorliegenden Erfindung kann ein solches Verbundformteil auf mindestens einem Teil seiner Oberfläche eine flächenhafte Dekorstruktur aufweisen. Die flächenhafte Dekorstruktur kann auch eine gesamte Oberfläche des Verbundformteils bedecken.

Bei einer besonderen Ausführungsform handelt es sich bei den Verbundformteilen um Formteile, welche im Innenraum von Automobilen zur Verkleidung von Türen und Armaturen verwendet werden. Dabei ist oft mindestens ein Teil der A-Seite des Verbundformteils, wobei die A-Seite die Fläche bezeichnet, die dem Fahrer zugewandt ist, von der flächenhaften Dekorstruktur bedeckt. Analog sei im Sinne der vorliegenden Erfindung unter der B-Seite eines Verbundformteils jene Seite zu verstehen, die nach der Montage dem Fahrer abgewandt ist. Besonders bevorzugt sind die Verbundformteile so umgebugt, dass die A-Seite eine Krümmung zur B-Seite an mindestens einer Kante beschreibt.

Ein Umbug ist im Sinne der vorliegenden Erfindung insbesondere dann realisiert, wenn eine Kante der flächenhaften Dekorstruktur einen Radius beschreibt. Dieser Umbug kann dazu führen, dass die Kante derart gekrümmt ist, dass sie einen Winkel von zwischen 90° und 180° beschreibt. Im Falle eines Winkels von 180° würden die Radien, ausgehend von einem Anfangsradius der Krümmung bis zu einem Endradius der Krümmung, den besagten Winkel aufspannen.

Die erfindungsgemässe Vorrichtung umfasst weiter mindestens zwei Formelemente zur Aufnahme der flächenhaften Dekorstruktur, welche so ausgelegt sind, dass sie von einem offenen in einen geschlossenen Zustand überführt werden können. Im geschlossenen Zustand definieren sie einen Hohlraum, welcher im Wesentlichen der Form des herzustellenden Verbundformteils entspricht. In der einfachsten Ausführungsform können die Formelemente aus konkaven Elementen bestehen, welche gemeinsam einen Hohlraum definieren. Bevorzugt weisen die Formelemente Kanten auf, welche im geschlossenem Zustand die Kanten eines gegenüberliegenden Formelementes kontaktieren, sodass der Hohlraum begrenzt wird.

Die Vorrichtung umfasst weiter eine Schneidkante, welche an einem ersten Formteil ausgebildet ist Die Schneidkante ist so ausgestaltet, dass sie bei besagten Überführen vom geschlossenen in den offenen Zustand einen Überschuss des Verbundformteils abtrennt In einer besonderen Ausführungsform ist die Schneidkante so am ersten Formteil angeordnet, dass beim Überführen vom geschlossenen in den offenen Zustand, sie an einem gegenüberliegenden Formelement so vorbeigleitet, dass sie einen Abstand zwischen den beiden Formelementen im Wesentlichen nahezu vollständig überbrückt. Dadurch kann ein Überschuss abgeschnitten werden.

Die erfindungsgemässe Vorrichtung umfasst weiter eine Umbugkante, welche an einem zweiten Formelement so ausgestaltet ist, dass sie den Hohlraum an einer Stirnseite begrenzt Im Sinne der vorliegenden Erfindung kann die Stirnseite des Hohlraums die Endfläche sein. Im Sinne der vorliegenden Erfindung sei unter der Endfläche, die Fläche der Hohlform zu verstehen, welche von dem Ende an dem eine Düse angeordnet ist, aus der eine schmelzflüssige Trägerstruktur in den Hohlraum injiziert wird, am weitesten beabstandet ist. In einer besonderen Ausfiihrungsform beschreibt diese Endfläche eine Krümmung, welche den Umbug formt.

Die Vorrichtung ist dadurch gekennzeichnet, dass die Formelemente im geschlossenen Zustand einen Überspritzbereich zwischen der Schneidkante und der Umbugkante bilden, sodass bei einer Befüllung des Hohlraums mit Trägerstruktur in schmelzflüssigem Zustand besagter Überschuss des Verbundformteiles entsteht. Der Überschuss umfasst somit sowohl flächenhafte Dekorstruktur, als auch Trägerstruktur.

Durch die erfindungsgemässe Vorrichtung kann in einem Schritt ein Verbundformteil hinterspritzt werden und während des anschliessenden Entformens, also beim Überführen der Vorrichtung in den offenen Zustand, ein Überschuss an Dekorstruktur sauber abgetrennt werden.

Die Verbindung von flächenhafter Dekorstruktur und Trägerstruktur an der Schnittstelle ermöglicht einen sauberen Schnitt und stabilisiert die Dekorstruktur gegen Ausfransen.

Ein weiterer Vorteil der erfindungsgemässen Lösung kann darin liegen, dass durch die Verbindung zwischen flächenhafter Dekorstruktur und Trägerstruktur mehr Spiel bestehen kann zwischen dem Schneidelement und dem gegenüberliegenden Formelement, da der gesamte Überschuss entlang der Schneidkannte mit der Schmelze verbunden ist und beim Schneidvorgang sauberer geschnitten wird. So können auch keine Fasern oder Bruchstücke aus der flächenhafte Dekorstruktur aus der Schnittfläche herausragen und auf das Produkt gelangen, wie dies passieren könnte beim Schneiden von flächenhaften Dekorstrukturen, die nicht an einer Trägerstruktur gebunden sind.

In einer besonderen Ausführungsform umfasst die Vorrichtung ein drittes Formelement, welches insbesondere als Matrize ausgebildet ist.

In einer besonderen Ausführungsform ist das erste Formelement als Patrize ausgebildet und das zweite Formelement als Schieber ausgebildet.

In einer besonderen Ausführungsform sind die Formelemente zueinander bewegbar ausgestaltet, insbesondere das zweite Formelement zu einem dritten Formelement bewegbar ausgestaltet. Die Bewegbarkeit der Formelemente kann durch entsprechende Lagerungen und Aktoren sichergestellt werden. Dabei können insbesondere pneumatische, hydraulische, mechanische, wie zum Beispiel Federantriebe und/oder lineare Antriebe, zum Beispiel elektrische Antriebe, Verwendung finden.

In einer besonderen Ausführungsform ist das dritte Formelement als Matrize ausgebildet und das zweite Formelement ist translatorisch in einem definierten Winkel, insbesondere ungleich 90°, zu einer Kontaktfläche der Matrize bewegbar ausgestaltet, bis das zweite Formelement die Kontaktfläche im geschlossenen Zustand kontaktiert. In einer besonderen Ausführungsform ist der Winkel ein Winkel von zwischen 10° und 85°, besonders bevorzugt von zwischen 20° und 30°, zur Kontaktfläche der Matrize.

In einer bevorzugten Ausführungsform ist das dritte Formelement ein Schieber. In einer besonderen Ausführungsform umfasst die Matrize ein Lager, auf dem der Schieber bewegbar gelagert ist. Bevorzugt schliesst das Lager einen Winkel von zwischen 10° und 85°, besonders bevorzugt von zwischen 20° und 30°, zu einer Senkrechten zur Kontaktfläche ein.

Durch diese Anordnung kann insgesamt Bauraum gespart werden und die Vorrichtung kompakter und günstiger gebaut werden.

In einer weiteren besonderen Ausführungsform ist der Schieber mittels eines Lagerungsstiftes in der Matrize gelagert, sodass bei einem Überführen der Vorrichtung in den geschlossenen Zustand der Lagerungsstift in ein Matrizenlager einfährt und beim entsprechenden Überführen in den offenen Zustand wieder ausfährt. Besonders bevorzugt ist das Matrizenlager schräg ausgebildet, das heisst in einem von einem 90° Winkel abweichenden Winkel bezüglich der Kontaktflächen zwischen dem Schieber und der Matrize angeordnet. Alternativ ist das Matrizenlager senkrecht zur Kontaktfläche ausgebildet.

In einer besonderen Ausführungsform ist der Hohlraum an der Umbugkante nicht fluiddicht.

In einer besonderen Ausführungsform ist das erste Formelement die Patrize und umfasst die Schneidkante, und das zweite Formelement der Schieber und umfasst die Umbugkante. Umbugkante und Schneidelement sind in dieser Ausführungsform bevorzugt einander gegenüberliegend angeordnet, sodass im geschlossenem Zustand eine Ausnehmung zwischen Umbugkante und Schneidelement besteht, durch den der Hohlraum nicht fluiddicht ist.

In einer besonderen Ausführungsform umfasst die Vorrichtung eine Arretierung zur Haltung der flächenhaften Dekorstruktur, wobei die Arretierung ausserhalb des Hohlraumes angeordnet ist. Besonders bevorzugt wird die flächenhafte Dekorstruktur nicht durch den Überspritzbereich gehalten. Dadurch kann die Dekorstruktur beim Injizieren der schmelzflüssigen Trägerstruktur innerhalb des Hohlraums die Verdrängung durch ebendiese besser mitmachen. Das flächenhafte Dekormaterial kann von ausserhalb des Hohlraums nachrutschen und die Fliessbewegung der schmelzflüssigen Trägerstruktur mitmachen. Dadurch kann eine zu starke Dehnung des Dekors vermieden werden, die entsteht, wenn diese nicht vorgeformt ist und erst durch die schmelzflüssige Trägerstruktur in die endgültige Formoberfläche gedrückt wird. So kann zum Beispiel eine Lederoptik mit Narbstruktur verarbeitet werden, ohne dass Dehnungen zu einer Beeinträchtigung der Optik führen können, wie ein Verziehen der Narbstruktur.

Bevorzugt ist die Arretierung zwischen dem Schieber und der Patrize angeordnet und besonders bevorzugt am Schieber ausgebildet. Alternativ ist die Arretierung an der Matrize ausgebildet.

In einer besonderen Ausführungsform ist der Überspritzbereich derart ausgestaltet, dass er im geschlossenen Zustand eine Fluidverbindung zum Hohlraum besitzt. Diese Fluidverbindung ist so ausgestaltet, dass eine vordefinierte und kontrollierte Menge der schmelzflüssigen Trägerstruktur hindurchtreten kann. Durch das Ausfüllen der Fluidverbindung mit der Trägerstruktur wird ausserdem die flächenhafte Dekorstruktur optimal zwischen den Schneidelementen und der Umbugkante, wo die Fluidverbindung angeordnet ist, positioniert, um in einer nachfolgenden Überführung der Vorrichtung in einem offenen Zustand durch eine translatorische Bewegung der Patrize abgetrennt zu werden.

Besonders bevorzugt ist der Überspritzbereich selbst als Kavität ausgebildet, welche über eine Fluidverbindung mit dem Hohlraum im geschlossenen Zustand verbunden ist. Bevorzugt wird der Überspritzbereich im geschlossenen Zustand durch mindestens zwei Formelemente, besonders bevorzugt durch entsprechende Strukturen am Schieber und der Patrize gebildet. In einer besonders bevorzugten Ausführungsform ist der Überspritzbereich begrenzt, das heisst er mündet in eine Kontaktfläche zwischen Patrize und Schieber, welche den Überspritzbereich abschliesst.

Eine vorteilhafte Ausführungsform der erfindungsgemässen Vorrichtung weist einen Überspritzbereich auf, der eine Länge bis ca. 100 mm, vorzugsweise zwischen 5 mm und 40 mm, aufweist. Dies bildet einen vorteilhaften Kompromiss zwischen einer möglichst langen Überspritzung, so dass mehr Material des flächenhaften Dekors für den Umbug-Auszug während des Hinterspritzens zur Verfügung steht, und einer kompakten Bauweise der Vorrichtung bzw. der Anforderung nach geringen Mengen an Abfallmaterial.

In einer besonderen Ausführungsform umfasst die Kontaktfläche zwischen Patrize und Schieber eine Schmelzbremse, um zu verhindern, dass zu viel schmelzflüssige Trägerstruktur zwischen die beiden Formelemente gelangt. Die Schmelzbremse kann so ausgestaltet sein, dass sie den Überspritzbereich fluiddicht begrenzt. So wären der Hohlraum und der Überspritzbereich fluidverbunden, aber gegen aussen fluiddicht abgeschlossen.

In einer besonderen Ausführungsform ist die Schmelzbremse an einem der beiden Formelemente, welche den Überspritzbereich im geschlossenen Zustand der Vorrichtung definieren ausgebildet. Er kann auch erst durch entsprechende Komponenten auf beiden involvierten Formelementen gebildet werden.

Durch die Schmelzbremse kann verhindert werden, dass schmelzflüssige Trägerstruktur in die Lager bewegbar ausgestalteter Formelemente gelangt. Ausserdem kann dadurch, in Verbindung mit einer Steuerung und/oder Definition der Druck- und Fliessparameter der zu injizierenden schmelzflüssigen Trägerstruktur ein allenfalls notwendiger Druck innerhalb des Hohlraumes und des Überspritzbereichs erzeugt werden.

In einer besonderen Ausfuhrungsform umfasst die Fluidverbindung eine Durchlassöffnung von zwischen 0.05 mm und 5 mm durch welche die Schmelze aus dem Hohlraum in den Überpritzbereich fliessen kann.

In einer besonderen Ausführungsform ist der Überspritzbereich zwischen 0.5 mm und 100 mm tief und zwischen 0.05 mm und 5 mm hoch. Bevorzugt wird der Überspritzbereich an seiner Stirnseite durch eine Schmelzbremse begrenzt, welche die Distanz zwischen den Formteilen vollständig überbrückt. Entsprechend könnte die für die eben beschriebene Ausführungsform eine geeignete Schmelzbremse eine Höhe von zwischen 0.05 mm und 5 mm aufweisen.

In einer besonderen Ausführungsform umfasst die erfindungsgemässe Vorrichtung mehrere Fluidverbindungen, welche jeweils in eigene voneinander unabhängige Überspritzbereiche münden, welche jeweils mit dem Hohlraum fluidverbunden sind.

Im Sinne der vorliegenden Erfindung besteht eine Fluidverbindung, wenn eine Ausnehmung vorhanden ist, deren Grösse ausreicht, um ein Material von der Viskosität einer schmelzflüssigen Trägerstruktur den Durchtritt zu ermöglichen. Im Sinne der vorliegenden Erfindung kann als Trägerstruktur ein Material verwendet werden, welches in einem gehärteten Zustand dem Verbundformteil im Wesentlichen die Form verleiht. In den meisten Fällen handelt es sich bei der Trägerstruktur um einen Kunststoff, insbesondere einen thermoplastischen Kunststoff. Die Trägerstruktur kann dann als Schmelze im schmelzflüssigen Zustand über eine geeignete Injektion oder Fliesseinrichtung in den Hohlraum der erfindungsgemässen Vorrichtung eingeführt oder eingespritzt werden, sodass dieser im Wesentlichen aufgefüllt wird. Der Hohlraum kann mit entsprechenden Strukturen und Formgebungen versehen sein, welche das zu herstellende Verbundformteil aufweisen muss.

In einer besonderen Ausführungsform umfasst die Vorrichtung weiter eine Einlassdüse, welche an einem Ende des Hohlraums im geschlossenen Zustand angeordnet ist und zur Injektion oder Einführung einer schmelzflüssigen Trägerstruktur in den Hohlraum, wie eben beschrieben, geeignet ist.

Eine weitere vorteilhafte Ausführungsform der Erfindung ist dadurch gekennzeichnet, dass eine Schutzabdeckung vorhanden ist, welche zur Abdeckung allfälliger, im offenen Zustand zwischen einer Gruppe von Formelementen gebildeten Spalte bzw. Schiebertrennungen ausgestaltet ist. Durch derartige Abdeckflächen, aus metallischem Werkstoff oder auch Kunststoff, wird ein Einklemmen der flächenhaften Dekorstruktur während des Schliessvorganges sicher verhindert. Ganz besonders betrifft dies die zweiten Formelemente, d.h. die Schieber mit den Umbugkanten, und die in allen Stellungen ausser dem komplett geschlossenen Zustand dazwischen gebildeten Schiebertrennungen.

Bevorzugt ist eine derartige Schutzabdeckung an zumindest einem der Formelemente befestigt, was einen besonders einfachen Aufbau gestattet Vorzugsweise ist die Schutzabdeckung direkt am zweiten Formelement befestigt und kann daher beim Schliessen der Formelemente mitbewegt werden. Dies gestattet eine möglichst kleine Bauweise der Schutzabdeckung. Alternativ dazu kann die Schutzabdeckung auch am typischerweise unbeweglichen dritten Formelelement befestigt sein, wodurch sich eine stabile und einfache Konstruktion erzielen lässt.

Um eine noch bessere Schutzwirkung zu gewährleisten, kann als optionales Zusatzmerkmal die Schutzabdeckung zumindest an ihrem inneren Endbereich eine Abkantung aufweisen.

Mit der erfindungsgemässen Vorrichtung wird eine Vorrichtung zur Herstellung von Verbundformteilen bereitgestellt, welche eine Reihe von Vorteilen mit sich bringt. Dadurch, dass die Schneidkante als Bestandteil eines Formelements ausgebildet ist, insbesondere der Patrize, kann auf eine zusätzliche Schneideinrichtung verzichtet werden. Daher ist keine Einpassung von Schneidmessern mit den entsprechenden Toleranzen erforderlich. Das erfindungsgemässe System ist zudem toleranter, da es einfacher ist, eine verbundene Trägerstruktur mit Dekorfolie abzutrennen, als eine Dekorfolie alleine. Durch den Verzicht auf eine separate Schneideinrichtung ist keine entsprechende Einrichtung für das Antreiben einer solchen erforderlich. Das führt zu Platzersparnissen, was wiederum die Gestaltungsfreiheit der Vorrichtung für die Formgebung des Verbundformteils vergrössert. Nicht zuletzt ist die erfindungsgemässe Vorrichtung vergleichsweise günstiger herstellbar, als wenn sie mit einem separaten zusätzlichen und angetriebenen Schneidmesser ausgestattet wäre, wie das in der EP 1 090 731 A1 der Fall ist. Ein weiterer Vorteil ist, dass durch das Verhindern des Ausfransens keine Fusseln aus einer faserhaltigen Dekorstruktur die Vorrichtung kontaminieren können oder am Verbundformteil hängen bleiben.

Ein weiterer Aspekt der vorliegenden Erfindung betrifft ein Verfahren zur Herstellung eines Verbundformteils, welches eine Trägerstruktur und eine flächenhafte Dekorstruktur umfasst und einen Umbug aufweist. Das erfindungsgemässe Verfahren umfasst eine Reihe von Schritten.

Zunächst wird eine Vorrichtung bereitgestellt, welche mindestens zwei Formelemente umfasst. Diese Formelemente definieren im geschlossenen Zustand einen Hohlraum, welcher im Wesentlichen der Form des herzustellenden Verbundformteils entspricht, bevorzugt wird eine Vorrichtung wie oben beschrieben bereitgestellt.

Eine flächenhafte Dekorstruktur wird in die Vorrichtung im offenen Zustand aufgenommen, dergestalt, dass die flächenhafte Dekorstruktur im geschlossenen Zustand mindestens teilweise in den Hohlraum zu liegen kommt. Dies kann durch einen Roboter oder manuell im offenen Zustand bewerkstelligt werden. Das erfindungsgemässe Verfahren umfasst den weiteren Schritt, dass die Formelemente in den geschlossenen Zustand überführt werden, so dass der besagte Hohlraum gebildet wird. Nun wird eine schmelzflüssige Trägerstruktur in den Hohlraum eingeschossen.

Das erfindungsgemässe Verfahren ist dadurch gekennzeichnet, dass eine definierte Menge schmelzflüssigen Trägerstruktur in einen Überspritzbereich ausserhalb des Hohlraums überspritzt wird, so dass ein Überschuss an Verbundformteil entsteht Dieser Überschuss am Verbundformteil wird beim Überführen der Formelemente in den offenen Zustand abgetrennt Dies kann bevorzugt durch ein Schneidelement geschehen, welches an einem der Formelemente ausgebildet ist

Eine vorteilhafte Variante des erfindungsgemässen Verfahrens sieht vor, dass die flächenhafte Dekorstruktur entweder als Vorformling in die Vorrichtung aufgenommen wird oder vor dem Überführen der Formelemente in den geschlossenen Zustand innerhalb zumindest der Matrize und des Schiebers vorgeformt wird. Bevorzugt wird dies mittels eines Thermoformprozesses bewerkstelligt. Gemäss einer vorteilhaften Variante dieses Verfahrens befinden sich dabei die Matrize und der Schieber in geschlossenem Zustand.

In einer besonderen Ausführungsform umfasst der weitere Schritt, dass die Formelemente in den geschlossenen Zustand überführt werden, einen ersten Unterschritt, bei dem eine Matrize in den geschlossenen Zustand überführt wird und einen zweiten Unterschritt, bei dem ein Schieber in den geschlossenen Zustand überführt wird, wobei der Schieber formschlüssig die Matrize auf einer Kontaktfläche kontaktiert.

In einer besonderen Ausführungsform wird die schmelzflüssige Trägerstruktur in einer definierten Menge eingeschossen, sodass ein kontrollierter Überschuss am Verbundformteil entsteht

In einer besonderen Ausführungsform wird die schmelzflüssige Trägerstruktur derart eingeschossen, dass über eine Fluidverbindung aus dem formgebenden Hohlraum ein Überschuss in einem Überspritzbereich ausserhalb des Hohlraums überspritzt wird. Besonders bevorzugt wird dieser Überschuss nach der Aushärtung der Trägerstruktur von einem Formteil durch translatorische Bewegung des Formteils zurück in einen offenen Zustand abgetrennt, indem ein Schneidelement, welches an besagten Formteil ausgebildet ist, mit einem gegenüberliegenden Formteil in Wirkverbindung tritt und somit ein Abschneiden des Überschusses bewirkt.

Besonders bevorzugt ist ein Schneidelement an der Patrize ausgebildet und schneidet beim Überführen der Vorrichtung vom geschlossenen in den offenen Zustand am Schieber durch eine entsprechende Wirkverbindung den Überschuss ab.

In einer besonderen Ausführungsform umfasst die erfindungsgemässe Vorrichtung insgesamt drei Formelemente, eine Matrize, einen Schieber und eine Patrize. Nach dem Aufnehmen des flächenhaften Dekors wird zunächst die Matrize mit der Patrize in Wirkverbindung gebracht. Die flächenhafte Dekorstruktur wird ausserhalb des so gebildeten Hohlraums und vorzugsweise auch ausserhalb des Überspritzbereichs arretiert Dazu kann entweder die Patrize, die Matrize oder der Schieber mit einer entsprechenden Arretierungseinrichtung vorgesehen sein. In der einfachsten Ausführungsform handelt sich dabei um einen Stift, der in eine entsprechende Ausnehmung auf dem gegenüberliegenden Formelement einpasst. Dabei wird die flächenhafte Dekorstruktur eingeklemmt.

In einem zweiten Schritt wird nun der Schieber mit der Matrize in Kontakt gebracht und dabei der Hohlraum definiert. Dies kann zum Beispiel eine translatorische und gelagerte Bewegung des Schiebers hin zur Matrize erfolgen. Ebenfalls denkbar wäre es das die Patrize eine weitere Schliessbewegung in Richtung der Matrize vorführt und dabei den Schieber in die geschlossene Position und in Kontakt mit der Matrize schiebt.

In einer besonderen Ausführungsform ist die Patrize so ausgestaltet, dass sie eine translatorische Bewegung zur Matrize hin oder zurück vollführen kann. Dies kann über einen Antrieb gewährleistet werden. In einer weiteren Ausführungsform ist der Schieber mit einem Rückstellelement ausgestattet, welches eine Rückstellkraft in den offenen Zustand ausübt. Dadurch wird der Schieber, wenn die Patrize keine Anpresskraft mehr auf ihn ausübt, wieder zurück in die offene Position geführt.

In einer besonderen Ausführungsform umfasst das Überführen der Matrize mitsamt dem Schieber vom geschlossenen in den offenen Zustand das Passieren eines Schneidelements einer entsprechenden Verengung an der Patrize, sodass eine Schneidbewegung durchgeführt wird.

Das erfindungsgemässe Verfahren ermöglicht es Verbundformteile mit einem einzigen Prozess ohne nachträgliche Bearbeitung mit Umbug und bereits zugeschnitten herzustellen. Dabei ist eine gute Qualität der Schnittkanten erreichbar, indem ein entsprechend angeformter Überschuss abgetrennt wird. Grundsätzlich versteht es sich für einen Fachmann von selbst, dass sämtliche oben genannte Ausführungsformen sowohl bei der Vorrichtung, als auch beim Verfahren in einer erfindungsgemässen Ausgestaltung in beliebiger Kombination verwirklicht können, sofern sie sich nicht explizit ausschliessen.

Im Folgenden wird die folgende Erfindung anhand konkreter Ausführungsbeispiele und Figur näher erläutert ohne allerdings auf diese eingeschränkt zu sein.

Die folgenden Figuren zeigen schematisch:
- Fig 1:: zeigt eine erfindungsgemässe Vorrichtung im offenen Zustand;
- Fig 2:: zeigt die erfindungsgemässe Vorrichtung mit aufgenommener flächenhaften Dekorstruktur im geschlossenen Zustand;
- Fig. 3:: zeigt die erfindungsgemässe Vorrichtung nach den Figuren 1 und 2, wobei be-reits eine schmelzflüssige Trägerstruktur in den Hohlraum eingelassen wird;
- Fig. 4:: zeigt die genannte Vorrichtung mit dem Überspritzbereich und dem somit erzeugten Überschuss;
- Fig. 5:: zeigt eine andere Ausführungsform der genannten Vorrichtung, mit einem etwas längeren Überspritzbereich und dem damit erzeugten grösseren Überschuss;
- Fig. 6:: zeigt die Überführung der Vorrichtung in den offenen Zustand, bei dem der Überschuss abgetrennt wird;
- Fig. 7:: zeigt eine Ausführungsform der erfindungsgemässen Vorrichtung in offenem Zustand aus der Richtung der Patrize (in Fig. 1 von rechts);
- Fig. 8:: zeigt die Ausführungsform der Fig. 7 in geschlossenem Zustand;
- Fig. 9:: zeigt die Ausführungsform der Fig. 7 mit Schutzabdeckungen für die Zwischenräume zwischen den Formelementen;
- Fig. 10:: zeigt die Ausführungsform der Fig. 9 im Querschnitt, mit der Schutzabdeckung befestigt an der Matrize;
- Fig. 11:: zeigt eine alternative Ausführungsform der Fig. 9 im Querschnitt, mit der Schutzabdeckung befestigt am Schieber; und
- Fig. 12:: zeigt eine weitere alternative Ausführungsform für eine Schutzabdeckung in Form eines umlaufenden Rahmens.

### FIGURENBESCHREIBUNG

Alle dargestellten Figuren sind nicht massstabsgetreu und dienen lediglich als Demonstration des erfindungsgemässen Konzepts und sollen durch die Darstellung der verschiedenen Positionen, welche die Vorrichtung einnehmen kann den Prozessverlauf ebenso wie die strukturellen Merkmale der erfindungsgemässen Vorrichtung illustrieren. Dabei ist selbstverständlich die letztlich erzeugte Form bestimmend für die Gestaltung der einzelnen Bauteile. Eine solche Anpassung ist den Kenntnissen des Fachmanns überlassen und weitgehend Routine.

In den Figuren werden jeweils die gleichen Bauteile mit den gleichen Bezugszeichen versehen.

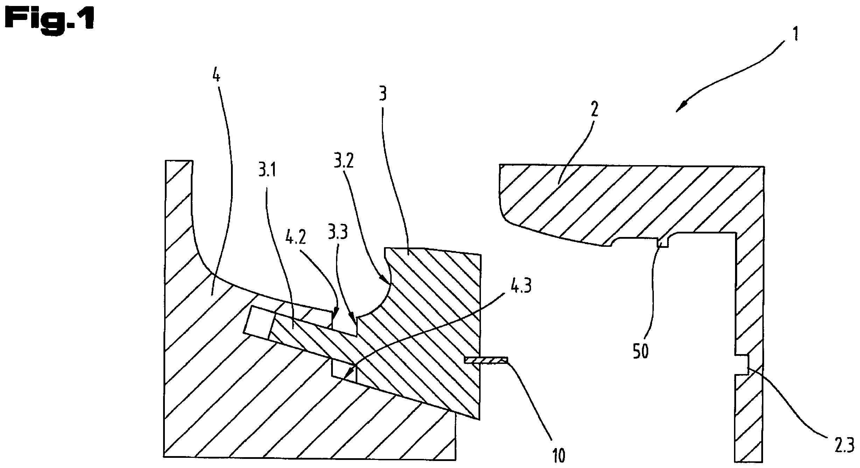

Figur 1 zeigt schematisch eine erfindungsgemässe Vorrichtung 1, welche insgesamt drei Formelement 2,3,4 aufweist. Die Vorrichtung 1 ist im offenen Zustand dargestellt. Im vorliegenden Beispiel ist Matrize 4 so ausgestaltet, dass sie eine translatorische Bewegung zur Patrize 2 vollführen kann. Somit hat die Patrize 2 die Funktion eines Stempels inne, welcher die Kavität, welche von der Matrize 4 gebildet wird, abschliesst. Im vorliegenden Beispiel ist der Schieber 3 aktuiert.

Der Schieber 3 weist zudem einen entsprechenden Umbugradius 3.2 auf, der für das Umbiegen der flächenhaften Dekorstruktur in der resultierenden Hohlform beim geschlossenen Zustand verantwortlich ist und im geschlossenen Zustand gebildeten Hohlraum stirnseitig liegt. Die Patrize weist eine Schmelzbremse 50 auf, welche im geschlossenen Zustand einen Überspritzbereich für eine Schmelze im Wesentlichen fluiddicht abschliesst. Die Vorrichtung 1 ist geeignet in eine Spritzgussmaschine eingebaut zu werden. Für die Zwecke der vorliegenden Erfindung kann es ausreichend sein für die Schmelzbremse 50, wenn sie den Überspritzbereich für eine Substanz mit den Viskositätseigenschaften einer schmelzflüssigen Trägerstruktur begrenzt. Dies wäre ein fluiddichter Abschluss im Sinne dieses Merkmals der Schmelzbremse 50, wäre aber selbstverständlich gegenüber weniger viskosen Fluiden entsprechend nicht fluiddicht.

Die Matrize 4 beinhaltet einen Antrieb, der mittels eines Stössels 3.1 den benachbarten Schieber 3 aktuiert. Der Schieber 3 ist im vorliegenden Beispiel auf einem Lager 4.3 der Matrize 4 parallel zur Lagerungsebene translatorisch zur Matrize 4 bewegbar. Das Lager 4.3 und der Stössel 3.1 sind dabei bezüglich der Kontaktflächen 4.2, 3.3 zwischen Matrize 4 und Schieber 3 abgewinkelt, das heisst nicht rechtwinklig angeordnet. Bevorzugt schliesst das Lager 4.3 und der Stössel 3.1 einen Winkel von 21° bezüglich einer Senkrechten zur Kontaktfläche 4.2 der Matrize 4 ein. Alternativ können die Lagerungsebenen des Stössels und des Schiebers auch nicht parallel sein (nicht gezeigt).

Am Schieber 3 ist eine Arretierung 10 ausgebildet, welche im geschlossenen Zustand in eine entsprechende Arretierungsausnehmung 2.3 der Patrize 2 aufgenommen wird und die Dekorstruktur 7 fixiert. Selbstverständlich kann eine entsprechende Arretierung auch auf der Patrize ausgebildet sein und die entsprechende Ausnehmung auf dem gegenüberliegenden Formteil, zum Beispiel dem Schieber. Die Arretierung 10 ist im vorliegenden Beispiel als Nadel ausgebildet.

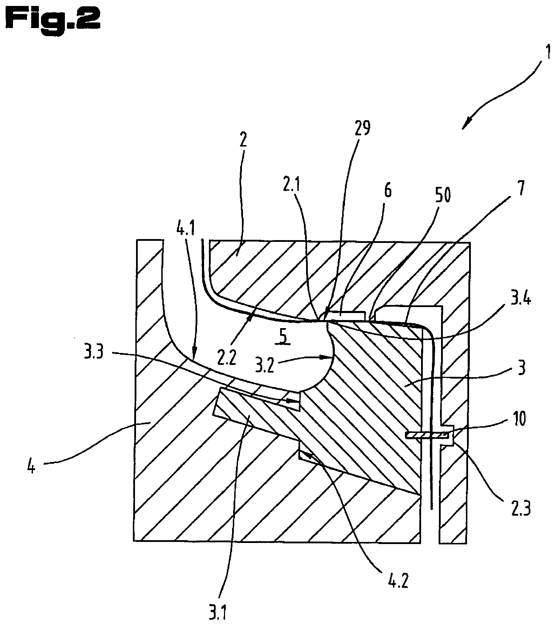

Im Betrieb wird zunächst eine Dekorstruktur 7, die hinterspritzt werden soll, eingelegt, bevor die Matrize 4 mitsamt dem Schieber 3 auf die Patrize 2 schliesst. Die Matrize 4 fährt anschliessend auf die Patrize 2 und anschliessend wird die Matrize mit dem Schieber in Kontakt gebracht, so dass die Kontaktfläche der Matrize 4.2 bündig mit der Kontaktfläche des Schiebers 3.3 schliesst. Dies kann durch einen entsprechenden Antrieb der Spritzgussmaschine (nicht gezeigt) bewerkstelligt werden. Dieser Zustand ist in der Fig. 2 gezeigt.

In der Figur 2 ist die gleiche Vorrichtung 1 mit einer aufgenommenen flächenhaften Dekorstruktur 7 gezeigt. Die Dekorstruktur 7 wird über die Arretierung 10 in der Ausnehmung 2.3 zwischen dem Schieber 3 und der Patrize 2 gehalten.

Eine vorteilhafte Variante des erfindungsgemässen Verfahrens sieht vor, dass die flächenhafte Dekorstruktur 7 als Vorformling in die Vorrichtung 1 aufgenommen wird, d.h. bereits im Wesentlichen in der Form vorliegt, welche dem herzustellenden Verbundformteil entspricht Gemäss einer alternativen Vorgangsweise kann die Dekorstruktur 7 auch in noch biegsamem bzw. biegeschlaffem Zustand in die Vorrichtung eingelegt und vor dem Überführen der Formelemente in den geschlossenen Zustand vorgeformt werden. Dies kann insbesondere mittels eines Thermoformprozesses bewerkstelligt werden.

Vorteilhafterweise findet dieser Vorgang innerhalb zumindest der Matrize 4 und des Schiebers 3 statt, die sich dabei bevorzugt in geschlossenem Zustand befinden. In diesem geschlossenen Zustand, der nur die Formelemente Matrize 4 und Schieber 3 betrifft, ist der Schieber 3 ganz in die Matrize 4 eingefahren (Zustand wie in Fig. 2) bzw. an diese maximal angenähert. Selbstverständlich kann der Thermoformprozess auch durchgeführt werden, wenn Matrize 4 und Schieber 3 nicht geschlossen sind (wie beispielsweise in Fig. 1 dargestellt ist).

Im geschlossenen Zustand bilden die Formteile 2, 3, 4 einen Hohlraum 5 und einen Überspritzbereich 6, durch welche sich nun die Dekorstruktur ebenfalls erstreckt. Die Arretierung kann in einer alternativen Ausführungsform oder in bei einer Ausgestaltung mit verschiedenen Umbugkanten auch an der Matrize und/oder der Patrize ausgebildet sein.

Der Hohlraum 5 wird an der geschlossenen Vorrichtung 5 aus durch entsprechende Grenzflächen 4.1, 3.2, 2.2 der Formelemente 2, 3, 4 gebildet. Der Hohlraum 5 ist über eine Fluidverbindung 29 mit dem Überspritzbereich 6 verbunden. Durch diese Fluidverbindung 29 erstreckt sich ebenfalls die flächenhafte Dekorstruktur 7.

Im vorliegenden Beispiel hat die Fluidverbindung 29 einen Durchmesser von 2.5 mm und erstreckt sich über die gesamte Länge der Stirnseitigen Kante der Patrize 2. Sie öffnet sich in einen Überspritzbereich 6, der sich von der Öffnung noch 25 mm nach hinten erstreckt und von einer entsprechenden Struktur der Patrize 2 gebildet wird. Nach hinten wird er von der Schmelzbremse 50 begrenzt, welche den Überspritzbereich 6 abschliesst und an der Patrize 2 ausgebildet ist und im Wesentlichen die gesamte Höhe des Überspritzbereichs, 2.5 mm überbrückt zum Schieber 3 und diesen kontaktiert. Dabei kann die Schmelzbremse so ausgestalte sein, dass sie ein Nachfliessen einer flächenhaften Dekorstruktur ermöglicht, also einen Zwischenraum lässt, der gerade knapp so breit ist wie die Dekorstruktur dick.

An der Patrize 2 ist angrenzenden an der Fluidverbindung ein Schneidelement 2.1 ausgebildet. Fakultativ kann auch der gegenüberliegende Schieber 3 mit einem korrespondierenden Schneidelement 3.4 ausgestattet sein. Auf jeden Fall sind die Schneidelemente 2.1, 3.4 im vorliegenden Beispiel so angeordnet, dass die Fluidverbindung 29 nicht beeinträchtigt wird. In einer solchen Ausführungsform könnte eine Rückbewegung der Patrize in den offenen Zustand eine beinahe Kontaktierung der Schneidelemente 2.1 der Patrize und des Schiebers verursachen, was zu einem Abschneiden des resultierenden Überschusses führen würde. Die gegenüberliegenden Kontaktflächen 4.2, 3.3 der Matrize 4 und des Schiebers 3 sind in Kontakt, während der Stössel 3.1 komplett in der Matrize 4 aufgenommen ist.

Die gezeigte Anordnung der Geometrien, welche die Oberflächen 4.1, 3.2, 2.2 bilden ist hier zur Darstellungszwecken einfach gehalten. Die einzelnen Formelemente 2,3,4 können auch jeweils andere Funktionen einnehmen und entsprechende Geometrien ihrer Oberflächen 2.2, 3.2, 4.1 aufweisen, um besondere Strukturen am gewünschten Verbundformteil zu verwirklichen. In diesem geschlossenen Zustand kann mit dem Einführen der Trägerstruktur begonnen werden.

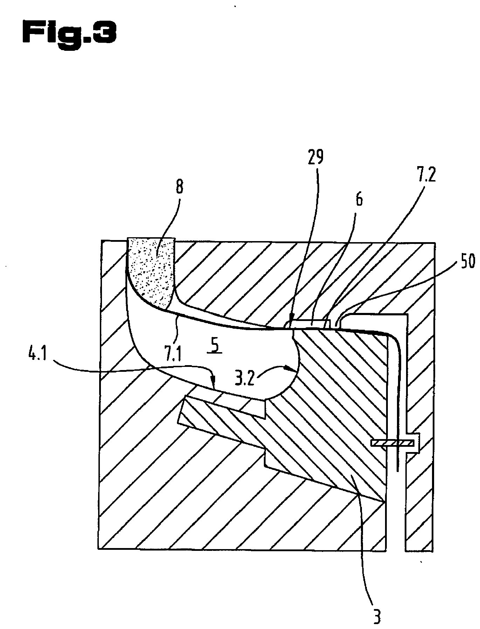

Die Figur 3 zeigt das Einführen einer schmelzflüssigen Trägerstruktur 8 in den Hohlraum 5. Dabei wird der Anteil 7.1 der flächenhaften Dekorstruktur, welche im Hohlraum 5 ist von der schmelzflüssigen Trägerstruktur 8 verdrängt, bis diese die Grenzfläche 4.1 der Matrize kontaktiert und an diese Oberfläche anformt. Dies kann auch dazu genutzt werden, gewisse Oberflächenstrukturen an der flächenhaften Dekorstruktur 7.1 zu verwirklichen, indem zum Beispiel Reliefs und/oder Profile (nicht gezeigt in Fig. 3) auf Grenzfläche 4.1 ausgebildet sind.

Neben dem ersten Teil 7.1 der flächenhaften Dekorstruktur, liegt im Überspritzbereich 6 im Anschluss an den Fluiddurchgang 29 ein zweites Teil, ein Überschussteil 7.2, welches ausserhalb des Hohlraums 5 zu liegen kommt und sich durch die Fluidverbindung 29 hindurch in den Überspritzbereich 6 und darüber hinaus erstreckt. Durch das Einschiessen der schmelzflüssigen Trägerstruktur 8 wird die flächenhafte Dekorstruktur 7.1, 7.2 zudem aus dem Überspritzbereich 8 in den Hohlraum 5 bei Bedarf nachgezogen. Dadurch, dass die flächenhafte Dekorstruktur 7.1, 7.2 an der Fluidverbindung 29 nicht festgehalten und arretiert ist, kann sie eine entsprechende Verformung durch die schmelzflüssige Trägerstruktur 8 akkommodieren, ohne dass sie dabei eine zu hohe Dehnung erfährt. Dadurch können besonders hochwertige Oberflächen erschaffen werden.

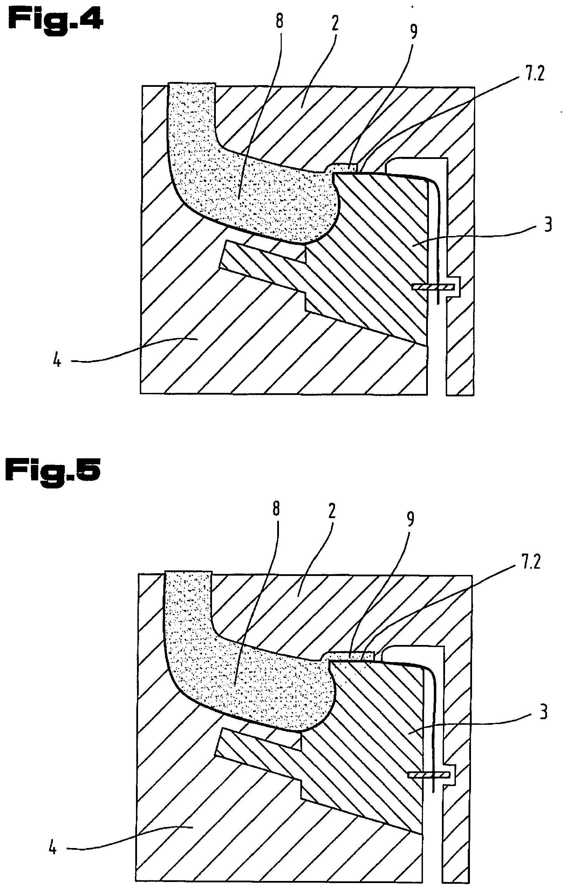

Im Betrieb wird schmelzflüssige Trägerstruktur 8 eingeschossen bis sie zur Stirnseite der Überspritzbereichs 6 gelangt und dort von der Schmelzbremse 50 am Austreten aus diesem Bereich gehindert wird. Durch den Druck, der dabei entsteht, wird die flächenhafte Dekorstruktur in die entsprechende Kavität gepresst und bildet auch durch die entsprechende Geometrie am Schieber 3, einer Umbug-Grenzfläche 3.2 einen Umbug aus. Im vorliegenden Beispiel beträgt dieser Umbug nahezu 180°. Dieser Zustand ist in der Fig. 4 illustriert.

In der Figur 4 hat die schmelzflüssige Trägerstruktur 8 den Hohlraum komplett ausgefüllt und ist über die Fluidverbindung in den Überspritzbereich 6 hinausgetreten und bildet einen Überschuss 9. Dieser Überschuss 9 ist genauso wie die Trägerstruktur 8 mit der flächenhaften Dekorstruktur 7.1 eine stoff- und formschlüssige Verbindung eingegangen. Dieser Überschuss 9 umfasst zudem noch den weiteren Überschuss 7.2 der flächenhaften Dekorstruktur, welcher nicht mit Trägerstruktur 8 verbunden ist.

Die Länge des Überspritzbereiches 6 ist in Fig. 4 derart gewählt, dass sie im Wesentlichen gleich oder grösser ist als ein Drittel der Dicke des Umbugs des Verbundformteils, d.h. dessen Dicke im Randbereich mit der umgeschlagenen Dekorstruktur 7.1. Für den Fall einer grösseren Länge des Überspritzbereiches 6 steht auch mehr Material der flächenhaften Dekorstruktur 7 für den Umbug-Auszug zur Verfügung, was manchmal erwünscht und vorteilhaft sein kann. So kann die Länge des Überspritzbereiches gleich oder grösser der halben Dicke des Umbugs sein, wie in Fig. 5 dargestellt ist Typischerweise beträgt die Länge des Überspritzbereiches bis etwa 100 mm betragen, meist wird sie zwischen 5 mm und 40 mm liegen. Die genannten vorteilhaften Dimensionierungen des Überspritzbereiches 6 bilden einen vorteilhaften Kompromiss zwischen einer möglichst langen Überspritzung, so dass mehr Material der Dekorstruktur 7 zur Verfügung steht, die während des Einschiessens der schmelzflüssigen Trägerstruktur 8 gedehnt und auseinandergezogen werden kann, und einer kompakten Bauweise der Vorrichtung 1 bzw. der Anforderung nach geringen Mengen an Abfallmaterial durch den abzutrennenden Überschuss 9.

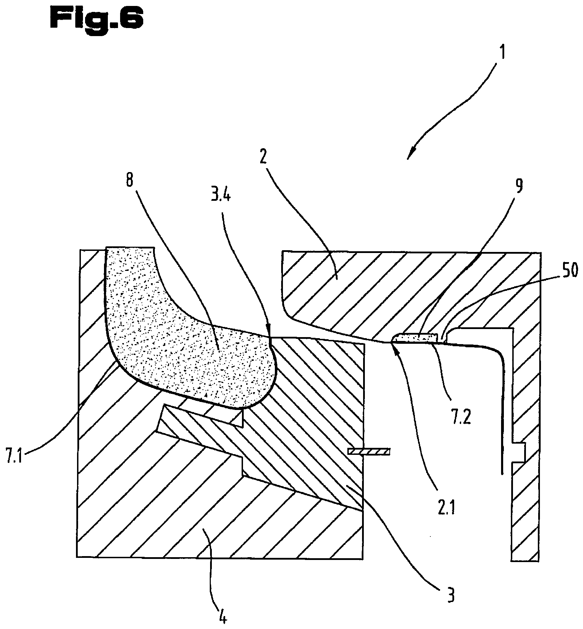

In der Figur 6 wird nun ein Überführen der Vorrichtung 1 in den offenen Zustand dargestellt, nämlich durch den ersten Schritt des Zurückfahrens der Matrize 4 und des Schiebers 3. Matrize 4 und Schieber 3 bleiben dabei in Kontakt. Für das Zurückfahren des Schiebers 3 in die ausgefahrene Position kann ein zusätzlicher Antrieb oder eine Feder vorgesehen sein (nicht gezeigt). Alternativ kann auch die Patrize 2 translatorisch wegbewegt werden.

Auf jeden Fall wird durch eine Bewegung einer Schneidkante 2.1, 3.4 der Überschuss 9 abgetrennt werden. Durch die Anordnung der ersten Schneidkante 2.1 an der Patrize 2 und der zweiten Schneidkante 3.4 am Schieber findet bei einer Verschiebung dieser beiden Formteile relativ zueinander eine Schneidbewegung statt, welche den Überschuss 9 vom Verbundformteil (der Trägerstruktur 8 mit der flächenhaften Dekorstruktur 7.1) abtrennt.

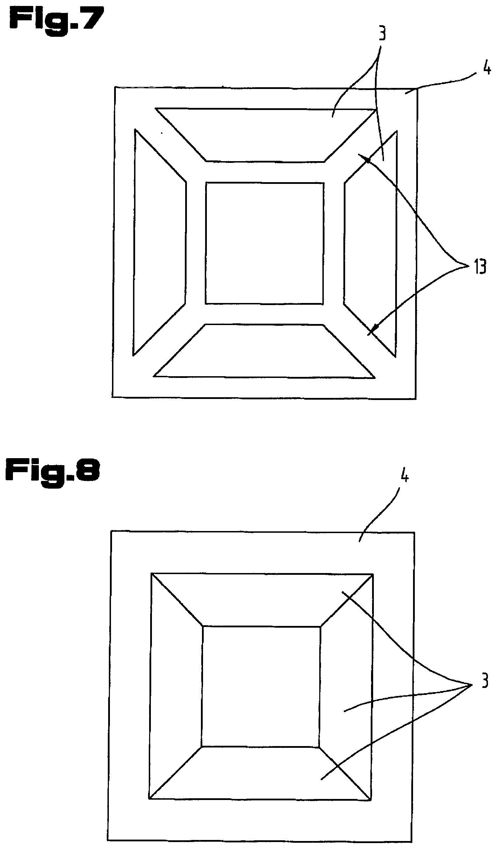

Wie in Fig. 7 dargestellt ist, sind aufgrund der Bewegung der Schieber 3 in einer Richtung schräg bezüglich der Kontaktflächen 4.2, 3.3 zwischen Matrize 4 und Schieber 3, das heisst nicht rechtwinklig zur Basisfläche der Matrize, die Schieber 3 in geöffnetem Zustand der Formelemente 2, 3, 4 etwas voneinander beabstandet. Zwischen den Schiebern 3 sind sogenannte Schiebertrennungen, d.h. Spalte 13 zwischen deren Seitenwangen, gebildet. Erst im komplett geschlossenen Zustand der Formelemente 2, 3, 4 kommen die Seitenwangen der Schieber 3 aneinander zu liegen und sind die Spalte 13 dann gänzlich geschlossen. Dieser Zustand ist in Fig. 8 in einer Ansicht aus Richtung der Patrize 2 dargestellt.

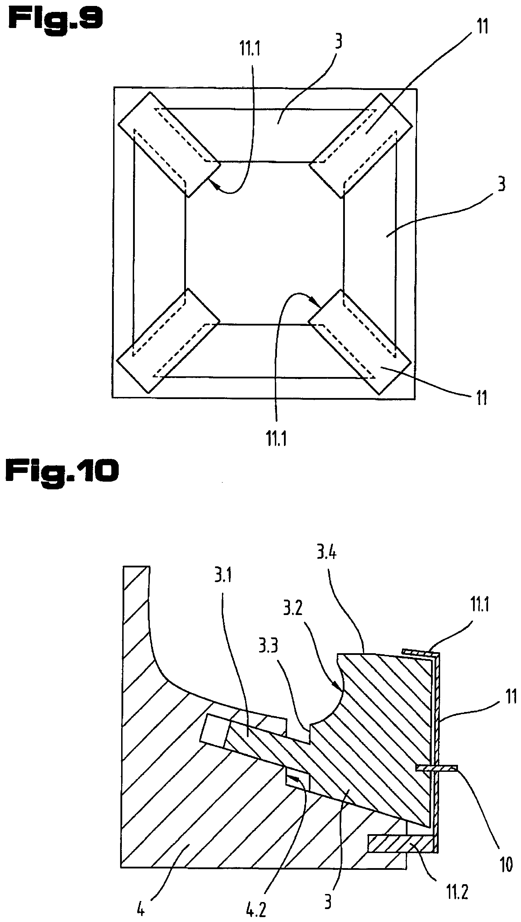

Um nun zu vermeiden, dass die Randbereiche der flächenhaften Dekorstruktur 7.1, 7.2 in diese Spalte 13 rutschen und dort beim Schliessvorgang der Formelemente 2, 3, 4 eingeklemmt werden, können diese Spalte 13 wie in Fig. 9 gezeigt durch Schutzabdeckungen 11 abgedeckt werden. Die Randbereiche der flächenhaften Dekorstruktur 7.1, 7.2 liegen auf diesen Schutzabdeckungen 11 auf und können daher nicht in die Spalte 13 geraten. Die Schutzabdeckungen 11 sind vorteilhafterweise als Platten aus Metall oder Kunststoff ausgeführt und erstrecken sich in der in den Fig. 9 bis 11 dargestellten Ausführungsform im Wesentlichen entlang der Schiebertrennungen bzw. Spalte 13. Abkantungen 11.1 dieser Schutzabdeckungen 11 in Richtung der Matrize 4 können am inneren Endbereich der Schutzabdeckungen 11 anschliessen und somit eine Abdeckung und einen Einklemmschutz auch in den innersten Bereichen der Spalte 13 bilden.

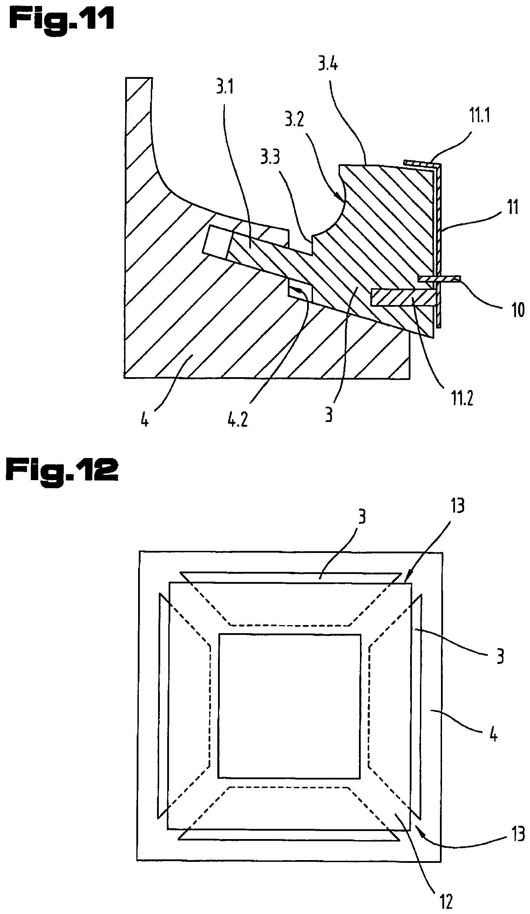

Die Befestigung der Schutzabdeckungen 11 erfolgt durch Spangen 11.2, Stifte oder ähnliche Bauteile, mittels derer die Schutzabdeckungen 11 an einem der Formelemente 2, 3.4 angebracht sind. Vorzugsweise ist die Schutzabdeckung 11, wie in Fig. 10 gezeigt, direkt am zweiten Formelement 3, d.h. dem Schieber, befestigt und wird dann mit diesem mitbewegt. Alternativ dazu kann die Schutzabdeckung 11 aber auch an der Matrize 4 befestigt sein, welche Variante in Fig. 11 dargestellt ist. Dabei ist auch zu erkennen, dass die Arretierung 10 über die Schutzabdeckung 11 hinausragt, um die ausreichende Fixierung der Dekorstruktur 7 zu gewährleisten.

In Fig. 12 ist eine weitere Ausführungsform einer Vorrichtung 1 dargestellt, bei welcher ein Einklemmschutz für die flächige Dekorstruktur 7 vorhanden ist. Anstelle der einzelnen Schutzabdeckungen 11, welche die einzelnen Schiebertrennungen bzw. Spalte 13 zwischen den Schiebern 3 abdecken, ist hier ein Abdeckrahmen 12 vorhanden, der sich als zumindest im Einsatzzustand einstückiger Bauteil über den gesamten inneren Umfang der Anordnung der zweiten Formelemente 3 und somit auch über die Spalte 13 zwischen den einzelnen Schiebern 3 erstreckt.

## Patentansprüche

1. Vorrichtung (1) zur Herstellung eines Verbundformteils, welches eine Trägerstruktur (8) und eine flächenhafte Dekorstruktur (7.1) umfasst und einen Umbug aufweist,
besagte Vorrichtung (1) umfassend:
a) mindestens zwei Formelemente (2,3,4) zur Aufnahme der flächenhaften Dekorstruktur (7.1, 7.2), welche so ausgelegt sind, dass sie von einem offenen in einen geschlossenen Zustand überführt werden können, und im geschlossenen Zustand einen Hohlraum (5) definieren, welcher im Wesentlichen der Form des herzustellenden Verbundformteils entspricht;
b) eine Schneidkante (2.1), welche an einem ersten Formelement (2) so ausgestaltet ist, dass bei besagtem Überführen vom geschlossenen in den offenen Zustand ein Überschuss (9) des Verbundformteils abtrennbar ist;
c) eine Umbugkante (3.4), welche an einem zweiten Formelement (3) so ausgestaltet ist, dass sie den Hohlraum (5) an einer Stirnseite begrenzt,
**dadurch gekennzeichnet, dass**
die Formelemente (2, 3, 4) im geschlossenen Zustand einen Überspritzbereich (6), insbesondere zwischen der Schneidkante (2.1) und der Umbugkante (3.4), bilden, so dass bei einer Befüllung des Hohlraumes (5) mit Trägerstruktur (8) in schmelzflüssigem Zustand besagter Überschuss (9) des Verbundformteils entsteht.

2. Vorrichtung gemäss Anspruch 1, wobei die Vorrichtung ein drittes Formelement (4) umfasst, welches insbesondere als Matrize ausgebildet ist.

3. Vorrichtung gemäss einer der Ansprüche 1 oder 2, wobei das erste Formelement (2) als Patrize ausgebildet ist und das zweite Formelement (3) als Schieber ausgebildet ist.

4. Vorrichtung gemäss einem der Ansprüche 1 bis 3, wobei die Formelemente (2, 3, 4) bewegbar zueinander ausgestaltet sind, insbesondere wobei das zweite Formelement (3) zu einem dritten Formelement (4) bewegbar ausgestaltet ist.

5. Vorrichtung gemäss Ansprüchen 3 und 4, wobei das dritte Formelement (4) als Matrize ausgebildet ist und das zweite Formelement (3) in einem definierten Winkel, insbesondere ungleich 90°, zu einer Endfläche (4.2) des dritten Formelements (4) bewegbar ist, bis das zweite Formelement (3) die Endfläche (4.2) kontaktiert.

6. Vorrichtung gemäss einem der Ansprüche 1 bis 5, weiter umfassend einen Antrieb für zumindest eine Gruppe von Formelementen (2, 3, 4), ausgewählt aus der Gruppe aus: Hydraulikzylinder, Pneumatikzylinder und/oder Linearantrieb.

7. Vorrichtung gemäss einem der Ansprüche 1 bis 6, weiter umfassend eine Arretierung (2.3, 10) zur Haltung der flächenhaften Dekorstruktur (7.1, 7.2), wobei die Arretierung ausserhalb des Hohlraumes (5) angeordnet ist

8. Vorrichtung gemäss einem der Ansprüche 1 bis 7, wobei der Überspritzbereich (6) derart ausgestaltet ist, dass er im geschlossenen Zustand eine Fluidverbindung (29) zum Hohlraum (5) besitzt, insbesondere wobei die Fluidverbindung (29) zwischen der Schneidkante (2.1) und der Umbugkante (3.4) angeordnet ist.

9. Vorrichtung gemäss einem der Ansprüche 1 bis 8, wobei der Überspritzbereich (6) eine Länge bis ca. 100 mm, vorzugsweise zwischen 5 mm und 40 mm, aufweist.

10. Vorrichtung gemäss einem der Ansprüche 1 bis 9, weiter umfassend eine Einlassdüse, welche an einem Ende des Hohlraumes (5) im geschlossenen Zustand angeordnet ist zur Injektion einer schmelzflüssigen Trägerstruktur (8) in den Hohlraum (5).

11. Vorrichtung gemäss einem der Ansprüche 1 bis 10, weiter umfassend zumindest eine Schutzabdeckung (11, 12), welche zur Abdeckung allfälliger, im offenen Zustand zwischen einer Gruppe von Formelementen (2, 3, 4), insbesondere zwischen den zweiten Formelementen (3), gebildeten Spalte (13) ausgestaltet ist.

12. Vorrichtung gemäss Anspruch 11, wobei die Schutzabdeckung (11, 12) an zumindest einem der Formelemente (2, 3, 4) befestigt ist, vorzugsweise am zweiten Formelement (3) und/oder am dritten Formelelement (4).

13. Vorrichtung gemäss Anspruch 11 oder 12, wobei die Schutzabdeckung (11) zumindest an ihrem inneren Endbereich eine Abkantung (11.1) aufweist.

14. Verfahren zur Herstellung eines Verbundformteils, welches eine Trägerstruktur (8) und eine flächenhafte Dekorstruktur (7.1) umfasst und einen Umbug aufweist,
umfassend die Schritte:
a) Bereitstellen einer Vorrichtung (1) umfassend mindestens zwei Formelemente (2, 3, 4), welche in geschlossenem Zustand einen Hohlraum (5) definieren, welcher im Wesentlichen der Form des herzustellenden Verbundformteils entspricht, insbesondere Bereitstellen einer Vorrichtung (1) gemäss einem der Ansprüche 1 bis 13;
b) Aufnehmen einer flächenhaften Dekorstruktur (7.1, 7.2) in die Vorrichtung (1) im offenen Zustand, dergestalt, dass die flächenhafte Dekorstruktur im geschlossenen Zustand mindestens teilweise in den Hohlraum (5) zu liegen kommt;
c) Überführen der Formelemente (2, 3, 4) in den geschlossenen Zustand, so dass der besagte Hohlraum (5) gebildet wird;
d) Einschiessen einer schmelzflüssigen Trägerstruktur (8),
**dadurch gekennzeichnet, dass**
eine definierte Menge der schmelzflüssigen Trägerstruktur (8) in einen Überspritzbereich (6) ausserhalb des Hohlraums (5) überspritzt wird, so dass ein Überschuss (9) am Verbundformteil entsteht, und Abtrennen des Überschusses (9) beim Überführen der Formelemente (2 3, 4) in den offenen Zustand.

15. Verfahren gemäss Anspruch 14, wobei die flächenhafte Dekorstruktur (7.1, 7.2) als Vorformling in die Vorrichtung (1) aufgenommen wird oder vor dem Überführen der Formelemente (2, 3, 4) in den geschlossenen Zustand innerhalb zumindest der Matrize (4) und des Schiebers (3) vorgeformt wird, insbesondere mittels eines Thermoformprozesses, wobei sich allenfalls die Matrize (4) und der Schieber (3) in geschlossenem Zustand befinden.

16. Verfahren gemäss Anspruch 14 oder 15, wobei das Überführen der Formelemente (2, 3, 4) in den geschlossenen Zustand die translatorische Verschiebung eines zweiten Formelements (3) mit einer Umbugkante (3.4) hin zu einem dritten Formelement (4) mit einer Kavität umfasst, insbesondere dergestalt, dass eine Kontaktfläche (3.3) des zweiten Formelements (3) eine Kontaktfläche (4.2) des dritten Formelements (4) kontaktiert und die translatorische Bewegung nicht in einem 90° Winkel zu den Kontaktflächen (3.3, 4.2) verläuft.

17. Verfahren gemäss einem der Ansprüche 13 bis 15, wobei die Menge an schmelzflüssiger Trägerstruktur (8) gesteuert wird, so dass der Überschuss (9), welcher sich in den Überspritzbereich (6) erstreckt, begrenzt wird.

## Claims

1. A device (1) for manufacturing a composite molded part, which comprises a support structure (8) and an areal decorative structure (7.1) and has a folded edge, said device (1) comprising:
a) at least two mold elements (2, 3, 4) for holding the areal decorative structure (7.1, 7.2), which are designed such that they can be moved from an open into a closed state, and in the closed state define a void (5), which essentially corresponds to the shape of the composite molded part to be manufactured;
b) a cutting edge (2.1) which is formed on a first mold element (2) such that during said movement from the closed into the open state, an excess (9) of the composite molded part can be removed;
c) a folding edge (3.4) which is formed on a second mold element (3) such that it limits the void (5) on a front side,
**characterized in that**
in the closed state the mold elements (2, 3, 4) form an overfeeding volume (6), in particular between the cutting edge (2.1) and the folding edge (3.4), such that when the void (5) is filled with support structure (8) in the molten state, said excess (9) of the composite molded part emerges.

2. The device according to claim 1, wherein the device comprises a third mold element (4), which is in particular formed as a matrix.

3. The device according to one of claims 1 or 2, wherein the first mold element (2) is formed as a patrix and the second mold element (3) is formed as a slider.

4. The device according to one of claims 1 to 3, wherein the mold elements (2, 3, 4) are designed to be movable relative to one another, in particular wherein the second mold element (3) is designed to be movable relative to the third mold element (4).

5. The device according to claims 3 and 4, wherein the third mold element (4) is formed as a matrix and the second mold element (3) is movable at a defined angle, in particular not equal to 90°, to an end face (4.2) of the third mold element (4), until the second mold element (3) contacts the end face (4.2).

6. The device according to one of claims 1 to 5, further comprising a drive for at least one group of mold elements (2, 3, 4), selected from the group of: hydraulic cylinder, pneumatic cylinder and/or linear drive.

7. The device according to one of claims 1 to 6, further comprising a latch (2.3, 10) for holding the areal decorative structure (7.1, 7.2), wherein the latch is arranged outside of the void (5).

8. The device according to one of claims 1 to 7, wherein the overfeeding volume (6) is designed such that in the closed state, it has a fluid connection (29) to the void (5), in particular wherein the fluid connection (29) is arranged between the cutting edge (2.1) and the folding edge (3.4).

9. The device according to one of claims 1 to 8, wherein the overfeeding volume (6) has a length of up to approximately 100 mm, preferably of between 5 mm and 40 mm.

10. The device according to one of claims 1 to 9, further comprising an inlet nozzle arranged on an end of the void (5) in the closed state for injecting a molten support structure (8) into the void (5).

11. The device according to one of claims 1 to 10, further comprising at least one protection cover (11, 12) designed for covering gaps (13) potentially formed between a group of mold element (2, 3, 4), in particular between the second mold elements (3), in the open state.

12. The device according to claim 11, wherein the protection cover (11, 12) is mounted to at least one of the mold elements (2, 3, 4), preferably to the second mold element (3) and/or to the third mold element (4).

13. The device according to claim 11 or 12, wherein the protection cover (11) comprises a bevel (11.1) at least on its inner end region.

14. A method for manufacturing a composite molded part, which comprises a support structure (8) and an areal decorative structure (7.1) and has a folded edge, comprising the steps:
a) providing a device (1) comprising at least two mold elements (2, 3, 4), which in the closed state define a void (5), which essentially corresponds to the shape of the composite molded part, in particular providing a device (1) according to one of claims 1 to 13;
b) holding an areal decorative structure (7.1, 7.2) in the device (1) in the open state, such that the areal decorative structure in the closed state at least partially comes to rest in the void (5);
c) moving the mold elements (2, 3, 4) into the closed state, such that said void (5) is formed;
d) injecting a molten support structure (8),
**characterized in that**
a defined amount of the molten support structure (8) is overfed into an overfeeding volume (6) outside of the void (5), such that an excess (9) emerges on the composite molded part, and removing the excess (9) when the mold elements (2, 3, 4) are moved into the open state.

15. The method according to claim 14, wherein the areal decorative structure (7.1, 7.2) is held in the device (1) as a preform or is preformed prior to the movement of the mold elements (2, 3, 4) into the closed state within at least the matrix (4) and the slider (3), in particular by means of a thermoforming process, wherein if need be the matrix (4) and the slider (3) are in the closed state.

16. The method according to claim 14 or 15, wherein the movement of the mold elements (2, 3, 4) into the closed state comprises the translational displacement of a second mold element (3) with a folding edge (3.4) towards a third mold element (4) with a cavity, in particular such that a contact surface (3.3) of the second mold element (3) contacts a contact surface (4.2) of the third mold element (4) and the translational displacement does not happen at an angle of 90° to the contact surfaces (3.3, 4.2).

17. The method according to one of claims 13 to 15, wherein the amount of molten support structure (8) is controlled such that the excess (9) extending into the overfeeding volume (6) is limited.

## Revendications

1. Dispositif (1) pour la fabrication d'une pièce moulée composite, qui comprend une structure porteuse (8) et une structure de décor de surface (7.1) et qui comprend un repli, ledit dispositif (1) comprenant :
a) au moins deux éléments de moule (2, 3, 4) pour le logement de la structure de décor de surface (7.1, 7.2), qui sont conçus de façon à pouvoir être passés d'un état ouvert à un état fermé et qui, dans l'état fermé, définissent un espace creux (5) qui correspond globalement à la forme de la pièce moulée composite à fabriquer;
b) une arête de coupe (2.1) qui est réalisée sur un premier élément de moule (2) de façon à ce que, lors dudit passage de l'état fermé à l'état ouvert, un excès (9) de la pièce moulée composite puisse être détaché ;
c) une arête de repli (3.4) qui est réalisée sur un deuxième élément de moule (3) de façon à ce qu'elle délimite l'espace creux (5) au niveau d'une face frontale,
**caractérisé en ce que**
les éléments de moule (2, 3, 4) forment, dans l'état fermé, une partie de sur-injection (6), plus particulièrement entre l'arête de coupe (2.1) et l'arête de repli (3.4), de façon à ce que, lors d'un remplissage de l'espace creux (5) avec la structure porteuse (8) en fusion, il en résulte ledit excès (9) de la pièce moulée composite.

2. Dispositif selon la revendication 1, le dispositif comprenant un troisième élément de moule (4) qui est conçu plus particulièrement comme une matrice.

3. Dispositif selon l'une des revendications 1 ou 2, le premier élément de moule (2) est conçu comme un poinçon et le deuxième élément de moule (3) est conçu comme un coulisseau.

4. Dispositif selon l'une des revendications 1 à 3, les éléments de moule (2, 3, 4) étant conçus de manière mobile entre eux, plus particulièrement le deuxième élément de moule (3) étant conçu de manière mobile par rapport à un troisième élément de moule (4).

5. Dispositif selon les revendications 3 et 4, le troisième élément de moule (4) étant conçu comme une matrice et le deuxième élément de moule (3) étant mobile à un angle défini, plus particulièrement différent de 90°, par rapport à une surface d'extrémité (4.2) du troisième élément de moule (4), jusqu'à ce que le deuxième élément de moule (3) entre en contact avec la surface d'extrémité (4.2).

6. Dispositif selon l'une des revendications 1 à 5, comprenant en outre un dispositif d'entraînement pour au moins un groupe d'éléments de moule (2, 3, 4), sélectionnés parmi le groupe constitué de : vérin hydraulique, vérin pneumatique et/ou dispositif d'entraînement linéaire.

7. Dispositif selon l'une des revendications 1 à 6, comprenant en outre un dispositif d'arrêt (2.3, 10) pour le maintien de la structure de décor en surface (7.1, 7.2), le dispositif d'arrêt étant disposé à l'extérieur de l'espace creux (5).

8. Dispositif selon l'une des revendications 1 à 7, la partie de sur-injection (6) étant conçue de façon à ce qu'elle comprenne, dans l'état fermé, une liaison fluidique (29) avec l'espace creux (5), plus particulièrement la liaison fluidique (29) étant disposée entre l'arête de coupe (2.1) et l'arête de repli (3.4).

9. Dispositif selon l'une des revendications 1 à 8, la partie de sur-injection (6) présentant une longueur jusqu'à environ 100 mm, de préférence entre 5 mm et 40 mm.

10. Dispositif selon l'une des revendications 1 à 9, comprenant en outre une buse d'entrée, qui est disposée à une extrémité de l'espace creux (5) dans l'état fermé, pour l'injection d'une structure porteuse (8) en fusion dans l'espace creux (5).

11. Dispositif selon l'une des revendications 1 à 10, comprenant en outre un recouvrement de protection (11, 12) qui est conçu pour le recouvrement d'un interstice (13) formé, le cas échéant, dans l'état ouvert, entre un groupe d'éléments de moule (2, 3, 4), plus particulièrement entre les deuxièmes éléments de moule (3).

12. Dispositif selon la revendication 11, le recouvrement de protection (11, 12) étant fixé à au moins un des éléments du moule (2, 3, 4), de préférence au deuxième élément de moule (3) et/ou au troisième élément de moule (4).

13. Dispositif selon la revendication 11 ou 12, le recouvrement de protection (11) comprend, au moins sur sa partie terminale interne, un pliage (11.1).

14. Procédé de fabrication d'une pièce moulée composite qui une structure porteuse (8) et une structure de décor de surface (7.1), comprenant les étapes suivantes :
a) mise à disposition d'un dispositif (1) comprenant au moins deux éléments de moule (2, 3, 4), qui définissent, dans l'état fermé, un espace creux (5), qui correspond globalement à la forme de l'élément de moule composite à fabriquer, plus particulièrement mise à disposition d'un dispositif (1) selon l'une des revendications 1 à 13 ;
b) logement d'une structure de décor de surface (7.1, 7.2) dans le dispositif (1) dans l'état ouvert, de façon à ce que la structure de décor de surface repose, dans l'état fermé, au moins partiellement dans l'espace creux (5) ;
c) passage des éléments du moule (2, 3, 4) à l'état fermé, de façon à ce que ledit espace creux (5) soit formé ;
d) injection d'une structure porteuse (8) en fusion,
**caractérisé en ce que**
une quantité définie de la structure porteuse (8) en fusion est sur-injectée dans une partie de sur-injection (6) à l'extérieur de l'espace creux (5), de façon à ce qu'un excès (9) apparaisse sur l'élément de moule composite, et détachement de l'excès (9) lors du passage des éléments de moule (2, 3, 4) à l'état ouvert.

15. Procédé selon la revendication 14, la structure de décor de surface (7.1, 7.2) est logée, en tant que pré-forme, dans le dispositif (1) ou est pré-formée, avant le passage des éléments du moule (2, 3, 4) à l'état fermé, à l'intérieur d'au moins la matrice (4) et du coulisseau (3), plus particulièrement au moyen d'un processus de thermoformage, la matrice (4) et le coulisseau (3) se trouvant, le cas échéant, dans l'état fermé.

16. Procédé selon la revendication 14 ou 15, le passage des éléments du moule (2, 3, 4) à l'état fermé comprenant le déplacement en translation d'un deuxième élément de moule (3) avec une arête de repli (3.4) vers un troisième élément de moule (4) avec une cavité, plus particulièrement de façon à ce qu'une surface de contact (3.3) du deuxième élément de moule (3) entre en contact avec une surface de contact (4.2) du troisième élément de moule (4) et le déplacement en translation ne forme avec les surface de contact (3.3, 4.2), un angle de 90°.

17. Procédé selon l'une des revendications 13 à 15, la quantité de structure porteuse (8) en fusion étant contrôlée de façon à ce que l'excès (9), qui s'étend dans la partie de sur-injection (6), soit limité.
